# EUROPÄISCHE PATENTSCHRIFT

(11) **EP 1 368 801 B1**
(45) Veröffentlichungstag und Bekanntmachung des Hinweises auf die Patenterteilung: **20.04.2005**
(21) Anmeldenummer: 02716813.7
(22) Anmeldetag: 26.02.2002
(51) Int. Cl.: G09G 3/28

(54) **VERFAHREN UND VORRICHTUNG ZUR VERBESSERUNG DER GRAUWERTAUFLÖSUNG EINER PULSBREITENGESTEURERTEN BILDANZEIGEVORRICHTUNG**
METHOD AND DEVICE FOR IMPROVING THE GREY SCALE RESOLUTION OF A PULSE WIDTH MODULATED IMAGE DISPLAY DEVICE
PROCEDE ET DISPOSITIF D'AMELIORATION DE LA RESOLUTION EN NIVEAUX DE GRIS D'UN DISPOSITIF D'AFFICHAGE D'IMAGES A MODULATION D'IMPULSIONS EN LARGEUR

(30) Priorität: 14.03.2001 DE 10112622
(43) Veröffentlichungstag der Anmeldung: 10.12.2003
(73) Patentinhaber: Grundig Multimedia B.V., 1083HJ Amsterdam (NL)
(72) Erfinder: FISCHBECK, Udo, 90766 Fürth (DE)
(74) Vertreter: Pröll, Jürgen
(86) Internationale Anmeldenummer: PCT/EP2002/002019
(87) Internationale Veröffentlichungsnummer: WO 2002/073581

(56) Entgegenhaltungen:
- EP-A- 0 653 740
- EP-A- 0 919 984
- PATENT ABSTRACTS OF JAPAN vol. 018, no. 659 (P-1843), 13. Dezember 1994 (1994-12-13) & JP 06 259034 A (FUJITSU GENERAL LTD), 16. September 1994 (1994-09-16)

## Beschreibung

Die Erfindung betrifft ein Verfahren und eine Vorrichtung zur Verbesserung der Grauwertauflösung einer pulsbreitengesteuerten Bildanzeigevorrichtung.

Ein derartiges Verfahren und eine derartige Vorrichtung kommen beispielsweise bei Plasmadisplays zum Einsatz, welche in Zukunft die bei höherwertigen Fernsehgeräten derzeit noch verwendeten Farbbildröhren ergänzen oder ersetzen werden. Im Zusammenhang mit Farbbildröhren ist der Benutzer hochwertiger Fernsehgeräte seit dem Ende der 80er Jahre aufgrund der 100-Hz-Technologie an eine flackerfreie Darstellung gewöhnt.

Aus der Zeitschrift Radio Fernsehen Elektronik RFE, Heft 2, 1997, Seiten 18-20, ist ein Plasmadisplay bekannt, das aus zwei Glasplatten mit matrixartig angeordneten Elektroden besteht, zwischen denen sich ein Edelgasgemisch befindet. Die Bildinformation wird bei Plasmadisplays nicht zeilenweise dargestellt wie bei Kathodenstahlröhren, sondern vollbildweise. Da bei einem Plasmadisplay die einzelnen Bildpunkte nicht zu beliebigen Zeiten einzeln ein- und ausgeschaltet werden können, muß die Aktivierung der Bildpunkte für das gesamte Display in einem Aktivierungsdurchgang erfolgen.

Die Ansteuerung eines Plasmadisplays erfolgt in mehreren Phasen: einer Adressierungs- oder Initialisierungsphase, einer Halte- oder Aktivierungsphase und einer Löschphase.

In der Adressierungs- oder Initialisierungsphase werden alle Zellen des Plasmadisplays vorgeladen, welche in der darauf folgenden Halte- oder Aktivierungsphase aktiviert werden sollen. Im letzten Schritt, der Löschphase, werden die vorgeladenen Zellen wieder entladen, die Bildinformation wird gelöscht.

Das zur Darstellung eines Fernsehbildes zur Verfügung stehende Zeitintervall wird in Teilzeitintervalle unterschiedlicher Dauer bzw. unterschiedlicher Gewichtung zerlegt, während derer in Abhängigkeit vom Helligkeitswert eines jeweiligen Bildpunktes eine vorgegebene Aktivierungssequenz gewählt wird. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Derartige bekannte Plasmadisplays werden beispielsweise von den Firmen Fujitsu und NEC am Markt vertrieben.

Aus der DE A1 198 33 597 sind ein Verfahren und eine Vorrichtung zur Flimmerreduzierung bei pulsbreitengesteuerten Bildanzeigevorrichtungen bekannt, insbesondere bei einem Farbplasmadisplay. Ein derartiges Farbplasmadisplay dient beispielsweise der Darstellung von Fernsehbildern. Das Farbplasmadisplay wird mittels eines Pulsbreitenmodulators angesteuert, wobei zur Anteuerung die Dauer eines Fernsehbildes in eine Reihe von Teilbildern bzw. Teilzeitintervallen zerlegt wird, die nacheinander dargestellt werden. Zur Flackerreduzierung, insbesondere einer 50-Hz-Flackerreduzierung, wird die Reihenfolge der Teilzeitintervalle und/oder der Aktivierungssequenzen der Teilzeitintervalle derart vorgegeben, dass das Flackern der darzustellenden Bilder minimal ist.

Weiterhin ist aus der DE-A1 198 37 307 eine bewegungsdetektorabhängige Veränderung der Reihenfolge der Teilzeitintervalle bekannt. Beim Vorliegen von Bewegungen wird die Reihenfolge der Teilzeitintervalle derart gewählt, dass Bewegungsartefakte vermieden werden. Ansonsten erfolgt die Wahl der Reihenfolge der Teilzeitintervalle derart, dass 50Hz-Flackerstörungen reduziert werden.

In der EP-A-0 919 984 ist ein Verfahren und eine Vorrichtung zur Verbesserung der Grauwertauflösung bei Plasmadisplays beschrieben, bei dem das zur Bilddarstellung zur Verfügung stehende Zeitintervall in Teilzeitintervalle unterschiedlicher Gewichtung unterteilt ist. Abhängig vom Auftreten bzw. nicht Auftreten heller Bildanteile wird dort vorgeschlagen, die Teilzeitintervalle zu modifizieren.

Aus der EP-A-0 653 740 ist ebenfalls ein Ansteuerverfahren für Plasmadisplays bekannt, bei dem das zur Bilddarstellung zur Verfügung stehende Zeitintervall in Teilzeitintervalle unterteilt ist. Auch dort wird zur Grauwertdarstellung von einer unterschiedlichen Gewichtung der Teilzeitintervalle ausgegangen. Darüber hinaus ist dort der bei Plasmadisplays bekannte Zusammenhang zwischen Bildhelligkeit und Stromverbrauch des Displays erwähnt.

Weiterhin ist es im Zusammenhang mit Plasmadisplays bereits bekannt, die Helligkeit eines darzustellenden Bildes zu erfassen, aus dem erfassten Helligkeitswert für jedes der Teilzeitintervalle des darzustellenden Bildes eine maximal zulässige Leuchtdauer abzuleiten und bei einer Veränderung des erfassten Helligkeitswertes die maximal zulässige Leuchtdauer für jedes der Teilzeitintervalle zu verändem. Diese Veränderung erfolgt derart, dass bei erfasstem dunklen Bildinhalt bzw. geringem Helligkeitswert die maximal zulässige Leuchtdauer in jedem der Teilzeitintervalle um dieselbe Zeitdauer erhöht wird. Ergibt hingegen die Helligkeitserfassung des darzustellenden Bildes, dass ein insgesamt heller Bildinhalt vorliegt, dann wird die maximal zulässige Leuchtdauer für jedes der Teilzeitintervalle um eine Zeitdauer verringert, die für alle Teilzeitintervalle gleich ist.

Ein Nachteil dieser Vorgehensweise besteht darin, dass der Kontrast des darzustellenden Bildes reduziert ist, da bei erfasster großer Helligkeit des darzustellenden Bildes die Zeitdauer für die Darstellung heller Bildbestandteile reduziert ist und bei erfasster geringer Helligkeit eines darzustellenden Bildes dunkelgraue Bildbestandteile hellgrau dargestellt werden, da diese durch die beschriebene Beaufschlagung mit einem konstanten Offset nach oben gezogen werden, d. h. länger leuchten.

Ausgehend von diesem Stand der Technik liegt der Erfindung die Aufgabe zugrunde, einen Weg aufzuzeigen, wie bei einer pulsbreitengesteuerten Bildanzeigevorrichtung die Grauwertauflösung verbessert werden kann.

Diese Aufgabe wird durch ein Verfahren mit den im Anspruch 1 angegebenen Merkmalen bzw. durch eine Vorrichtung mit den im Anspruch 2 angegebenen Merkmalen gelöst.

Durch die in den Ansprüchen beschriebene Erfassung der Helligkeit durch eine Auswertung des momentanen Stromverbrauchs der Bildanzeigevorrichtung erfolgt eine indirekte Erfassung der Helligkeit des darzustellenden Bildes, die den Gegebenheiten des Displays am besten gerecht wird.

Weitere vorteilhafte Eigenschaften der Erfindung ergeben sich aus der Erläuterung eines Ausführungsbeispiels anhand der Figuren.

Es zeigt:
- Figur 1: ein Blockschaltbild eines Fernsehempfängers mit einer pulsbreitengesteuerten Plasmadisplayanzeige;
- Figur 2: ein Diagramm zur Erläuterung der Erfindung und
- Figur 3: ein weiteres Diagramm zur Erläuterung der Erfindung.

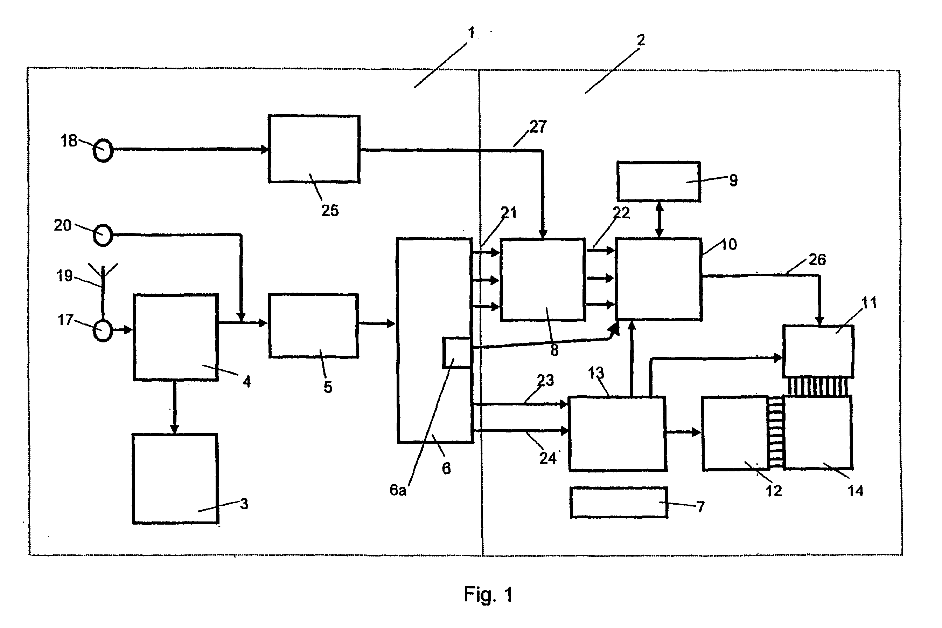

Die Figur 1 zeigt ein Blockschaltbild eines Fernsehempfängers mit einer impulsbreitengesteuerten Plasmadisplayanzeige. Der Fernsehempfänger 1, 2 weist ein Fernsehsignalverarbeitungsteil 1 und ein Bildverarbeitungsteil 2 auf.

Der Fernsehsignalverarbeitungsteil 1 weist einen ersten Eingang 17 auf, dem die Signale einer Antenneneinrichtung 19 zugeführt werden. Die Signale des Eingangs 17 werden an eine Hochfrequenz- und Zwischenfrequenz-Verarbeitungseinheit 4 sowie eine Audiosignalverarbeitungseinheit 3 weitergeleitet. Am Ausgang der Hochfrequenz- und Zwischenfrequenz-Verarbeitungseinheit 4 liegt ein FBAS-Signal vor, welches einem Analog-/Digitalwandler 5 zugeführt wird. Die Einspeisung eines externen FBAS-Signals ist über einen zweiten Signaleingang 20 möglich. Das Ausgangssignal des Analog-/Digitalwandlers 5 wird anschließend zu einer sogenannten Feature-Box 6 geleitet. Die Feature-Box 6 führt bestimmte Funktionen wie Demodulation des FBAS-Signals, Standbild, Zoom, Formatanpassung, Bildschärfeoptimierung, Bild-in-Bild, etc. durch. Die so entstehenden digitalen Komponenten Y, U, V eines Bildsignals 21 werden an eine digitale Matrixeinheit 8 des Bildverarbeitungsteils 2 weitergeleitet. Die Feature-Box 6 dient darüber hinaus der Wandlung des Zeilensprungsignals in ein zeilensprungfreies Signal und der notwendigen Anpassung der Signale an den Bildschirm 14 durch Zeileninterpolation. Dies erfolgt mit Hilfe der Synchronisationssignale 23, 24 zur Vertikal- und Horizontalsynchronisation.

Die digitale Matrixeinheit 8 weist darüber hinaus einen Anschluß 27 zur Zuführung eines über einen externen Signaleingang 18 zugeführten VGA-Signals auf, welches mittels eines Analog-/Digitalwandlers 25 in ein digitales Signal umgewandelt wird. Am Ausgang der digitalen Matrixeinheit 8 liegt ein RGB-Signal 22 vor, mit welchem ein Pulsbreitenmodulator 10 angesteuert wird. Der Pulsbreitenmodulator 10 erzeugt die Ansteuersignale 26 für einen Adresstreiber 11. Für diese Signalerzeugung ist mit dem Pulsbreitenmodulator 10 ein Speicher 9 gekoppelt. Der Pulsbreitenmodulator 10 weist eine Teilzeitintervallgewichtungseinheit auf, die zur Gewichtung der Teilzeitintervalle dient, d. h. zur Festlegung von deren Reihenfolge und Dauer. Die Adresstreibereinrichtung 11 steuert zeilenweise die einzelnen Spalten des Plasmabildschirms 14 an. Die zugehörige Zeitensteuerung erfolgt mit Hilfe der Zeitensteuereinrichtung 13, die den Beginn der Teilzeitintervalle und die Zeiten für die Adressier- und Aktivierungsphase festlegt. Hierzu dient die in der Zeitensteuerung enthaltene Teilzeitintervallzeilensteuereinrichtung. Die Zeitensteuereinrichtung 13 ist mit einem Horizontaltreiber 12 verbunden. Dieser Horizontaltreiber 12 ist während der Aktivierungsphasen aktiv. Die Spannungsversorgung erfolgt mit Hilfe eines Netzteils 7.

Während die Funktionsweise und der Aufbau des Fernsehsignalverarbeitungsteils 1 im wesentlichen dem eines konventionellen Fernsehempfängers mit Bildröhre entspricht, ist der Aufbau des Bildverarbeitungsteils 2 grundverschieden. Der Hauptgrund hierfür liegt vor allem darin, dass die Plasmaanzeigeeinrichtung 14 einen digitalen Zusammenhang zwischen der Eingangsgröße und der Leuchtdichte aufweist. Es existieren somit lediglich zwei Zustände: eingeschaltet oder ausgeschaltet. Um dennoch eine große Palette von verschiedenen Zwischengraustufen erzielen zu können, wird bei dem in Figur 1 dargestellten Bildverarbeitungsteil 2 zur Bilddarstellung ein digitales Zeitmultiplexverfahren verwendet. Bei diesem werden die RGB-Signale 22 in mehrere Teilzeitintervalle unterschiedlicher Dauer zerlegt, d. h. in Teilzeitintervalle unterschiedlicher Gewichtung.

Dies erfolgt mit Hilfe des Pulsbreitenmodulators 10 sowie der den Pulsbreitenmodulator ansteuernden weiteren Einheiten wie der Zeitensteuereinrichtung 13 und eines Speichers 9. Durch die Trägheit des menschlichen Auges erscheinen auf der Plasmaanzeigeeinrichtung 14 nicht mehr einzelne Bildwechsel, sondern ein Grauwert, der von der mittleren Aktivierungsdauer abhängt. Ist diese Dauer in den Teilzeitintervallen gewichtet, dann können mit wenigen Teilzeitintervallen viele Graustufen dargestellt werden. Bei einer binären Gewichtung (1,2,4,8,...) können zwei potenziert mit der Anzahl der Teilzeitintervalle Graustufen dargestellt werden. Um möglichst viele Graustufen darstellen zu können, ist es somit wünschenswert, möglichst viele Teilzeitintervalle zu verwenden, was allerdings aufgrund technologischer Randbedingungen nicht möglich ist. Der Pulsbreitenmodulator 10 bestimmt durch eine Zuordnung, die von seinem Eingangssignalpegel abhängig ist, für jeden Bildpunkt des darzustellenden Bildes die Reihenfolge und Aktivierung der einzelnen Teilzeitintervalle. Im Falle einer binären Gewichtung sieht diese Zuordnung derart aus, dass dem digital höchstgewichteten Bit das längste Teilzeitintervall, dem zweithöchstgewichteten Bit das zweitlängste Teilzeitintervall, usw., zugewiesen wird.

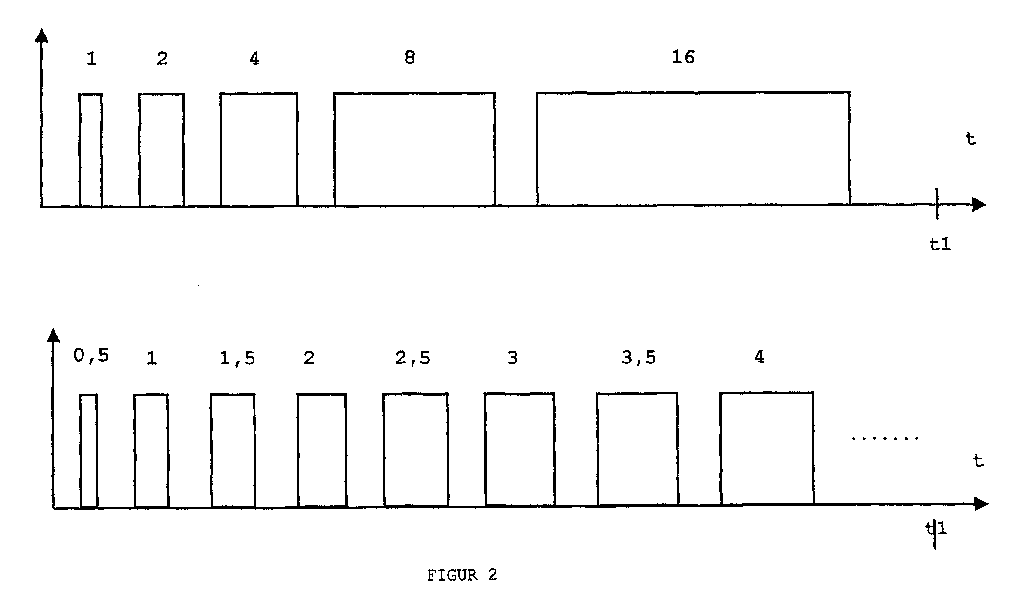

Gemäß der Erfindung berücksichtigt der Pulsbreitenmodulator 10 bei seiner Zuordnung der Leuchtdauem zu den einzelnen Teilzeitintervallen die vom Helligkeitsdetektor 6a ermittelte Information über den Helligkeitsgehalt des darzustellenden Bildes. Wie dies geschieht, wird nachfolgend anhand der Figur 2 beispielhaft erläutert, welche ein Diagramm zur Erläuterung der Erfindung zeigt.

In der oberen Darstellung von Figur 2 ist das für eine Bilddarstellung zur Verfügung stehende Zeitintervall in fünf aufeinanderfolgende, binär gewichtete Teilzeitintervalle aufgeteilt. Das erste Teilzeitintervall hat die Wertigkeit 1, das zweite Teilzeitintervall die Wertigkeit 2, das dritte Teilzeitintervall die Wertigkeit 4, das vierte Teilzeitintervall die Wertigkeit 8 und das fünfte Teilzeitintervall die Wertigkeit 16. Beim ersten, zweiten und dritten Teilzeitintervall handelt es sich um Teilzeitintervalle mit niedrigen Gewichtungen, beim vierten und fünften Teilzeitintervall um Teilzeitintervalle mit höheren Gewichtungen.

In der Figur sind die Teilzeitintervalle innerhalb des für eine Bilddarstellung insgesamt verfügbaren Zeitintervalles, das von t = 0 bis t = t1 reicht, im Sinne einer zunehmenden Gewichtung aufeinanderfolgend angeordnet. Es kann jedoch - wie es aus dem eingangs genannten Stand der Technik bekannt ist - die Reihenfolge der gewichteten Teilzeitintervalle auch anders gewählt werden, beispielsweise im Sinne einer Grossflächen-Flimmerreduzierung.

Weiterhin ist in der oberen Darstellung von Figur 2 das für eine Bilddarstellung zur Verfügung stehende Zeitintervall in fünf aufeinanderfolgende, binär gewichtete Teilzeitintervalle aufgeteilt. Dies dient lediglich der Veranschaulichung. In der Praxis wird eine andere Zahl von binär gewichteten Teilzeitintervallen gewählt, beispielsweise 8 Teilzeitintervalle. Bei einer derartigen Wahl sind insgesamt 255 Graustufen darstellbar.

Wird mittels des Helligkeitsdetektors 6a detektiert, dass ein helles Bild vorliegt, dann erfolgt die Bilddarstellung unter Verwendung des vorstehend beschriebenen Gewichtungsschemas, bei welchem sowohl erste Teilzeitintervalle mit niedrigen Gewichtungen verwendet werden, d. h. die Teilzeitintervalle mit den Gewichtungen 1, 2 und 4, als auch zweite Teilzeitintervalle mit höheren Gewichtungen verwendet werden, d. h. die Teilzeitintervalle mit den binären Gewichtungen 8 und 16.

Wird hingegen mittels des Helligkeitsdetektors 6a detektiert, dass ein dunkles Bild vorliegt, dann erfolgt die Bilddarstellung unter Verwendung des in der unteren Darstellung von Figur 2 beispielhaft gezeigten Gewichtungsschemas. Bei diesem wird auf eine Verwendung der vorstehend genannten zweiten Teilzeitintervalle mit höheren Gewichtungen, d. h. von Teilzeitintervallen mit den Gewichtungen 8 und 16, verzichtet. Stattdessen wird die Anzahl der Teilzeitintervalle mit niedrigen Gewichtungen durch Verwendung zusätzlicher Teilzeitintervalle mit niedrigen Gewichtungen erhöht, wobei sich die Gewichtungen der zusätzlichen Teilzeitintervalle von den Gewichtungen der ersten Teilzeitintervalle mit niedrigen Gewichtungen unterscheiden.

So geht aus der unteren Darstellung von Figur 2 hervor, dass dort neben Teilzeitintervallen mit den Gewichtungen 1, 2 und 4, die auch bei der oberen Darstellung von Figur 2 vorliegen, zusätzlich Teilzeitintervalle mit den Gewichtungen 0,5; 1; 1,5; 2; 2,5; 3; 3,5 und 4 vorliegen.

Durch eine Verwendung dieser zusätzlichen Teilzeitintervalle mit niedrigen Gewichtungen wird die Grauwertauflösung des auf der Anzeigeeinheit 14 dargestellten Bildes verbessert. Diese Verbesserung wird bei allen als dunkel identifizierten Bildern erzielt. Bei diesen dunklen Bildern kann auf eine Verwendung von Teilzeitintervallen höherer Wertigkeit verzichtet werden.

In der unteren Darstellung der Figur 2 sind die Teilzeitintervalle innerhalb des für eine Bilddarstellung insgesamt verfügbaren Zeitintervalles, das von t = 0 bis t = t1 reicht, im Sinne einer zunehmenden Gewichtung aufeinanderfolgend angeordnet. Es kann jedoch - ebenso wie es im Zusammenhang mit der oberen Darstellung in Figur 2 beschrieben wurde und wie es aus dem eingangs genannten Stand der Technik bekannt ist - die Reihenfolge der gewichteten Teilzeitintervalle auch anders gewählt werden, beispielsweise im Sinne einer Flackerreduzierung.

Auch bei der unteren Darstellung in Figur 2 ist die Aufteilung des für eine Bilddarstellung zur Verfügung stehenden Zeitintervalles in insgesamt acht Teilzeitintervalle unterschiedlicher Gewichtung nur zur Veranschaulichung der Erfindung erfolgt. In der Praxis kann auch eine andere Zahl von gewichteten Teilzeitintervallen verwendet werden.
In vorteilhafter Weise ist es ausreichend das MSB (Most Significant Bit) auszuwerten. Entfällt in einem Zeitintervall die Darstellung des MSBs, so ist dann im Zeitintervall die Möglichkeit gegeben weitere kleinere Subfileds, d.h. Subfields mit geringer Gewichtung darzustellen, anstatt des Subfields mit großer Gewichtung. Es ist im weiteren auch möglich auf die Darstellung der Bildpunkte, bei weichen ein MSB gesetzt ist, vollkommen zu verzichten, wenn der Anzahl bei der Darstellung eines Halbbildes gering ist. Dies hat aber zur Folge, daß eine Verfälschung der Darstellung im hellen Bereich erfolgt.
Zugleich erfolgt dann aber einer verbesserte Darstellung für Szenen im dunklen Bereich, da für deren Darstellung mehr Subfileds verwendet werden können und diese folglich besser Aufgelöst darstellbar sind.

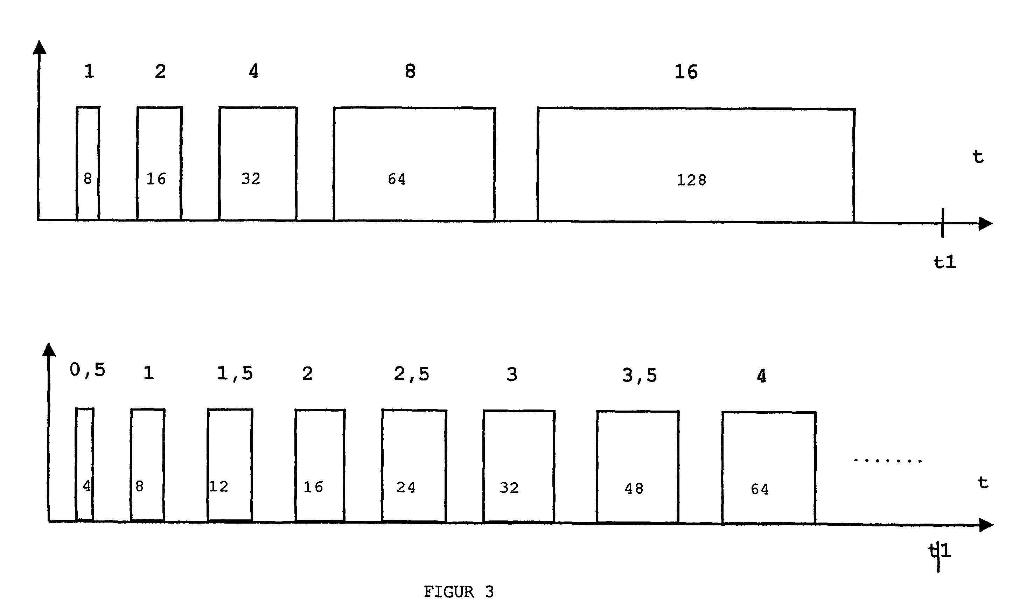

Ein Teilzeitintervall besteht aus mehreren darin zu aktivierenden Subfileds, mit mehreren Entladungen der Plasmazellen zur Erzeugung des darzustellenden Bildes. Eine derartige Entladung wird als Sustianpuls bezeichnet. Die Anzahl der Sustinpulse wird erfindungsgemäß reduziert. Dies wird anhand von Figur 3 exemplarisch dargestellt.

Alternativ zu dem oben beschriebenen Ausführungsbeispiel, bei welchem die Ermittlung einer Information über den Helligkeitsgehalt eines darzustellenden Bildes unter Verwendung eines in der Feature-Box 6 angeordneten Helligkeitsdetektors 6a erfolgt, kann die benötigte Helligkeitsinformation auch mittels eines Stromverbrauchsdetektors ermittelt werden. Dieser Stromverbrauchsdetektor wertet den momentanen Stromverbrauch der Bildanzeigevorrichtung aus und stellt dem Pulsbreitenmodulator 10 die benötigte Information zur Verfügung.

Weiterhin wurde beim oben beschriebenen Ausführungsbeispiel lediglich zwischen dem Vorliegen heller und dem Vorliegen dunkler Bilder unterschieden. Das Prinzip der Erfindung kann auch dahingehend erweitert werden, dass zwischen dem Vorliegen heller, mittelheller und dunkler Bilder unterschieden wird und in Abhängigkeit davon unterschiedliche Gewichtungsschemas gewählt werden, deren Charakteristika vorzugsweise in einem Speicher abgelegt sind, welcher in Abhängigkeit vom Ausgangssignal des Helligkeitsdetektors adressiert wird.

Eine vorteilhafte Weiterbildung der Erfindung besteht darin, eine Auswertung der Helligkeit von mehreren aufeinanderfolgenden Bildern vorzunehmen und eine zeitliche Filterung der ermittelten Helligkeitsinformationen durchzuführen. Dadurch wird erreicht, dass nicht bildweise zwischen den beiden in Figur 2 dargestellten Gewichtungsschemas umgeschaltet wird.

## Patentansprüche

1. Verfahren zur Verbesserung der Grauwertauflösung bei einer pulsbreitengesteuerten Bildanzeigevorrichtung, bei welchem
- das für eine Bilddarstellung zur Verfügung stehende Zeitintervall in aufeinanderfolgende gewichtete Teilzeitintervalle aufgeteilt wird, wobei erste Teilzeitintervalle mit niedriger Gewichtung und zweite Teilzeitintervalle mit höherer Gewichtung vorgesehen sind, und die den Bildpunkten des darzustellenden Bildes zugehörigen Helligkeitssignale durch Umwandlung in den Teilzeitintervallen zugeordnete Aktivierungssequenzen erzeugt werden,
- die Helligkeit eines darzustellenden Bildes erfasst wird, wobei beim Erkennen dunkler Bilder auf eine Verwendung der zweiten Teilzeitintervalle mit höheren Gewichtungen verzichtet wird und stattdessen die Anzahl der Teilzeitintervalle mit niedrigen Gewichtungen durch Verwendung zusätzlicher Teilzeitintervalle mit niedrigen Gewichtungen erhöht wird und wobei sich die Gewichtungen der zusätzlichen Teilzeitintervalle von den Gewichtungen der ersten Teilzeitintervalle mit niedrigen Gewichtungen unterscheiden,
- **dadurch gekennzeichnet, daß** die Erfassung der Helligkeit des darzustellenden Bildes durch eine Auswertung des momentanen Stromverbrauchs der Bildanzeigevorrichtung erfolgt.

2. Vorrichtung zur Verbesserung der Grauwertauflösung bei einer pulsbreitengesteuerten Bildanzeigevorrichtung, mit
- Ansteuermitteln (9 -13) zur Aufteilung des für eine Bilddarstellung zur Verfügung stehenden Zeitintervalls in aufeinanderfolgende gewichtete Teilzeitintervalle, wobei erste Teilzeitintervalle mit niedrigen Gewichtungen und zweite Teilzeitintervalle mit höheren Gewichtungen vorgesehen sind, und zur Erzeugung von den Bildpunkten des darzustellenden Bildes zugehörigen Helligkeitssignalen durch Umwandlung in den Zeitintervallen zugeordnete Aktivierungssequenzen,
- einem Helligkeitsdetektor (6a) zur Erfassung der Helligkeit des darzustellenden Bildes,
wobei
- die Ansteuermittel (9 - 13) dazu vorgesehen sind, beim Erkennen dunkler Bilder auf eine Verwendung der zweiten Teilzeitintervalle mit höheren Gewichtungen zu verzichten und stattdessen die Anzahl der Teilzeitintervalle mit niedrigen Gewichtungen durch Verwendung zusätzlicher Teilzeitintervalle mit niedrigen Gewichtungen zu erhöhen, wobei sich die Gewichtungen der zusätzlichen Teilzeitintervalle von den Gewichtungen der ersten Teilzeitintervalle mit niedrigen Gewichtungen unterscheiden,
- **dadurch gekennzeichnet, daß** der Helligkeitsdetektor ein Stromverbrauchsdetektor ist, der zur Auswertung des momentanen Stromverbrauchs der Bildanzeigevorrichtung ausgebildet ist.

## Claims

1. Method of improving the grey-value resolution in the case of a pulse-width-controlled picture display device, in which
- the time interval available for a picture display is divided up into consecutive, weighted time subintervals, wherein first time subintervals are provided with low weighting and second time subintervals are provided with higher weighting, and the brightness signals associated with the pixels of the picture to be displayed are generated by conversion into activation sequences assigned to the time subintervals,
- the brightness of a picture to be displayed is determined, wherein, if dark pictures are detected, use of the second time subintervals with higher weightings is dispensed with and, instead, the number of time subintervals having low weightings is increased by using additional time subintervals having low weightings and wherein the weightings of the additional time subintervals differ from the weightings of the first time subintervals having low weightings,
- **characterized in that** the brightness of the picture to be displayed is determined by an evaluation of the instantaneous current consumption of the picture display device.

2. Device for improving the grey-value resolution in a pulse-width-controlled picture display device, comprising
- drive means (9-13) for dividing the time interval available for a picture display into consecutive, weighted time subintervals, wherein first time subintervals are provided with low weightings and second time subintervals are provided with higher weightings, and for generating brightness signals associated with the pixels of the picture to be displayed by conversion into activation sequences assigned to the time intervals,
- a brightness detector (6a) for determining the brightness of the picture to be displayed,
wherein
- the drive means (9-13) are provided to dispense with use of the second time subintervals having higher weightings if dark pictures are detected and, instead, to increase the number of time subintervals having low weightings by using additional time subintervals having low weightings, wherein the weightings of the additional time subintervals differ from the weightings of the first time subintervals having low weightings,
- **characterized in that** the brightness detector is a current-consumption detector that is designed to evaluate the instantaneous current consumption of the picture display device.

## Revendications

1. Procédé pour améliorer la résolution en valeurs de gris dans un dispositif d'affichage d'images commandé du point de vue de la largeur des impulsions, selon lequel
- l'intervalle disponible pour une représentation d'image est réparti dans des intervalles de temps partiels successifs pondérés, des premiers intervalles de temps partiels avec une faible pondération et des seconds intervalles de temps partiels avec une pondération plus élevée étant prévus, et les signaux de luminosité, associés aux points de l'image devant être représentée sont produits par conversion en des séquences d'activation associées aux intervalles de temps partiels,
- la luminosité d'une image devant être représentée est détectée, auquel cas lors de l'identification d'images sombres, on se passe de l'utilisation des seconde intervalles de temps partiels avec des pondérations plus élevées et, au lieu de cela, on augmente le nombre des intervalles de temps partiels ayant des pondérations faibles, moyennant l'utilisation d'intervalles de temps partiels supplémentaires ayant des pondérations faibles, et les pondérations des intervalles de temps partiels supplémentaires se distinguant des pondérations des premiers intervalles de temps partiels avec de faibles pondérations,
- **caractérisé en ce que** la détection de la luminosité de l'image devant être représentée est réalisée au moyen d'une évaluation de la consommation de courant instantanée du dispositif d'affichage d'images.

2. Dispositif pour améliorer la résolution de valeurs de gris dans un dispositif d'affichage d'images commandé du point de vue de la largeur des impulsions, comportant
- des moyens de commande (9-13) pour diviser l'intervalle de temps disponible pour une représentation d'image en des intervalles de temps pondérés successifs, des premiers intervalles de temps partiels ayant de faibles pondérations et des seconds intervalles de temps partiels ayant des pondérations plus élevées étant prévus, et pour produire des signaux de luminosité associés aux points de l'image devant être représentée, par conversion en des séquences d'activation associées aux intervalles de temps,
- un détecteur de luminosité (6a) pour produire la luminosité de l'image devant être représentée,
dans lequel
- les moyens de commande (9-13) sont prévus pour, lors de l'identification d'images sombres, se passer de l'utilisation des seconds intervalles de temps partiels ayant des pondérations plus élevées et, au lieu de cela, accroître le nombre des intervalles de temps partiels avec de faibles poids, moyennant l'utilisation d'intervalles de temps partiels supplémentaires avec de faibles pondérations, auquel cas les pondérations des intervalles de temps partiels supplémentaires diffèrent. des pondérations des premiers intervalles de temps partiels ayant de faibles pondérations,
- **caractérisé en ce que** le détecteur de luminosité est un détecteur de consommation de courant, qui sert à évaluer la consommation de courant instantanée du dispositif d'affichage d'images.
